# EUROPÄISCHE PATENTSCHRIFT

(11) **EP 3 969 765 B1**
(45) Veröffentlichungstag und Bekanntmachung des Hinweises auf die Patenterteilung: **31.01.2024**
(21) Anmeldenummer: 20730965.9
(22) Anmeldetag: 11.05.2020
(51) Int. Cl.: F16B 31/02, F16B 1/00, F16B 5/02, F16B 11/00, F16B 37/14

(54) **MECHANISCHES VERBINDUNGSBAUTEIL MIT DRUCKINDIKATOR**
MECHANICAL CONNECTION COMPONENT WITH A PRESSURE INDICATOR
COMPOSANT DE LIAISON MÉCANIQUE AVEC INDICATEUR DE PRESSION

(30) Priorität: 13.05.2019 AT 504272019
(43) Veröffentlichungstag der Anmeldung: 23.03.2022
(73) Patentinhaber: Revotec ZT GmbH, 1030 Wien (AT)
(72) Erfinder: REITERER, Michael, 1030 Wien (AT); MUIK, Joachim, 1080 Wien (AT)
(74) Vertreter: Puchberger & Partner Patentanwälte
(86) Internationale Anmeldenummer: PCT/AT2020/060191
(87) Internationale Veröffentlichungsnummer: WO 2020/227745

(56) Entgegenhaltungen:
- US-A- 3 908 508
- US-A- 4 114 428
- US-A- 4 771 999
- US-A- 4 899 591
- US-A1- 2009 092 457
- US-B1- 7 412 898

## Beschreibung

Die vorliegende Erfindung betrifft ein mechanisches Verbindungsbauteil wie zum Beispiel eine Schraube, einen Gewindestab oder einen Bolzen mit den Merkmalen des Oberbegriffs des unabhängigen Patentanspruchs 1,

Mechanische Verbindungsbauteile werden im Stand der Technik üblicherweise zum Verbinden von zwei oder mehr Elementen eingesetzt. Dabei wird das Verbindungsbauteil in Freistellungen der jeweiligen Elemente eingeführt bzw. durch die Freistellungen durchgeführt, woraufhin das Verbindungsbauteil mit einer Spannkraft bzw. einer Vorspannung beaufschlagt wird. Diese Spannkraft sorgt für eine kraftschlüssige Verbindung zwischen den zu verbindenden Elementen. Das Ausüben der Spannkraft kann beispielsweise durch Festziehen einer Schraube oder einer Gewindemutter erfolgen.

Besonders in Anwendungen, die Verbindungen über einen langen Zeitraum hinweg gewährleisten müssen, beispielsweise bei Verbindungsbauteilen für Brücken, Masten und Tragelementen, kann es im Laufe der Zeit zu einer Lockerung der Verbindung kommen. Dies kann insbesondere dann der Fall sein, wenn die verbundenen Elemente starken dynamischen Belastungseinwirkungen mit den damit verbundenen Vibrationen ausgesetzt sind, wie etwa bei Tragelementen an Eisenbahnstrecken oder auf stark verkehrsbelasteten Brücken.

Besteht die Gefahr der Lockerung der Verbindungsbauteile, ist eine regelmäßige Kontrolle erforderlich, um eine sichere Befestigung der miteinander verbundenen Bauteile zu gewährleisten. Die Kontrolle erfolgt üblicherweise manuell, wobei eine Lockerung dann erst erkannt werden kann, wenn die Verbindung bereits vollständig gelöst ist, d.h., beispielsweise wenn eine Schraube oder Spannmutter vollkommen locker ist. Dies ist mit dem Nachteil verbunden, dass eine entsprechende Anzahl an Verbindungsbauteilen vorgesehen sein muss, um dennoch eine sichere Befestigung zu ermöglichen. Zusätzlich ist die beschriebene Kontrolle oft nur unter erhöhtem Aufwand durchführbar, da die entsprechenden Verbindungsbauteile an schwer unzugänglichen Stellen positioniert sein können.

Die US 7,412,898 B1 beschreibt ein Verbindungsbauteil, das dazu eingerichtet ist, die Vorspannung des Bauteils zu messen und die Messdaten mittels einer RFID-Einrichtung zu übertragen. Bei einem derartigen Verbindungsbauteil kann jedoch eine Fehlfunktion der RFID-Einrichtung auftreten, was ein Sicherheitsrisiko darstellen könnte.

Es ist daher die Aufgabe der vorliegenden Erfindung, ein Verbindungsbauteil zu schaffen, das die genannten Nachteile des Standes der Technik überwindet und das bevorzugt eine Detektion des Nachlassens der Spannkraft bzw. der Vorspannkraft ermöglicht, bevor die gesamte Spannwirkung verloren gegangen ist. Dadurch wäre es auch möglich, die Anzahl der notwendigen Verbindungsbauteile zu reduzieren.

Diese und weitere Aufgaben werden mit einem erfindungsgemäßen Verbindungsbauteil gelöst.

Die Erfindung betrifft also ein Verbindungsbauteil zum Verbinden eines ersten Elements mit einem zweiten Element durch Ausüben einer Spannkraft, umfassend einen ersten Spannbereich und einen vom ersten Spannbereich beabstandet angeordneten zweiten Spannbereich, wobei zwischen dem ersten Spannbereich und dem zweiten Spannbereich ein Dehnungsbereich angeordnet ist. Der Dehnungsbereich kann auch als Klemmlänge bezeichnet werden. Der Verbindungsbauteil kann auch zur Verbindung von mehr als zwei Elementen miteinander ausgeführt sein.

Erfindungsgemäß ist vorgesehen, dass das Verbindungsbauteil durch die Ausübung der Spannkraft von einer entspannten Stellung in eine gespannte Stellung bringbar ist, wobei sich die Länge des Dehnungsbereichs, und somit die Länge des Verbindungsbauteils, beim Ausüben der Spannkraft erhöht. In der entspannten Stellung ist das Verbindungsbauteil also kürzer als in der gespannten Stellung.

Erfindungsgemäß erstreckt sich im Inneren des Verbindungsbauteils, und wenigstens im Dehnungsbereich, eine längsgestreckte Ausnehmung. Wenigstens teilweise innerhalb dieser Ausnehmung ist ein Druckstift angeordnet, der einen Kopfabschnitt umfasst und an einem Ende mit dem Verbindungsbauteil verbunden ist und an seinem anderen Ende nicht mit dem Verbindungbauteil verbunden ist. Vorzugsweise erstreckt sich der Druckstift vom ersten Spannbereich zumindest bis zum zweiten Spannbereich, also über den gesamten Dehnungsbereich. Vorzugsweise ist der Kopfabschnitt an jenem Ende des Druckstifts angeordnet, das nicht mit dem Verbindungsbauteil verbunden ist.

Im Bereich des Kopfabschnitts des Druckstifts ist ein Druckindikator angeordnet.

Dabei ist der Kopfabschnitt derart positioniert, um in der entspannten Stellung des Verbindungsbauteils Druck auf den Druckindikator auszuüben und in der gespannten Stellung des Verbindungsbauteils keinen oder einen im Vergleich zur entspannten Stellung reduzierten Druck auf den Druckindikator auszuüben.

Insbesondere kann die Ausübung der Spannkraft eine im Wesentlichen rein elastische Verformung des Verbindungsbauteils, insbesondere des Dehnungsbereichs, bewirken. Die Spannkraft ist also insbesondere derart anzupassen, dass diese im Wesentlichen unter der Streckgrenze des Materials des Verbindungsbauteils liegt. Bevorzugt liegt die Spannkraft in einem Bereich von größer als 10 kN, weiter bevorzugt über 50 kN, wenn das Verbindungbauteil ein Bolzen mit einem Durchmesser von 20 mm ist. Ein Fachmann wird die Spannkraft auf Basis des Durchmessers des Bolzens und der gewünschten Anwendung entsprechend anpassen.

Der Druckstift ist insbesondere im Dehnungsbereich und bevorzugt auch im zweiten Spannbereich nicht mit dem Verbindungsbauteil verbunden. Dadurch folgt der Druckstift einer Elongation des Dehnungsbereichs nicht und es wird eine Relativbewegung zwischen dem zweiten Spannbereich und dem Kopfabschnitt des Druckstifts ermöglicht. Die relative Position zwischen dem ersten Spannbereich und dem Druckstift bleibt im Wesentlichen konstant.

In Zusammenhang mit der vorliegenden Erfindung wird als Dehnungsbereich insbesondere jener Bereich eines Verbindungsbauteils bezeichnet, der sich bei Ausübung einer Spannkraft dehnt. Diese Spannkraft kann insbesondere zwischen den zwei Spannbereichen aufgebracht werden. Zwar liegt der Dehnungsbereich zwischen den zwei Spannbereichen, es ist jedoch zu beachten, dass die exakte Erstreckung des Dehnungsbereichs üblicherweise nicht angegeben werden kann, da dieser in der Regel fließend in die Spannbereiche übergeht.

Gegebenenfalls ist vorgesehen, dass sich die Ausnehmung vom ersten Spannbereich bis zum zweiten Spannbereich erstreckt. Gegebenenfalls ist vorgesehen, dass sich der Druckstift vom ersten Spannbereich zum zweiten Spannbereich erstreckt, und dass ein Ende des Druckstifts im ersten Spannbereich mit dem Verbindungsbauteil verbunden ist, und im zweiten Spannbereich nicht mit dem Verbindungsbauteil verbunden ist. Bevorzugt erstreckt sich der Druckstift über die vollständige Länge des Dehnungsbereichs. Dadurch wird eine besonders hohe Sensitivität erreicht, da der Druckstift den gesamten Dehnungsbereich abdeckt.

Der Kopfabschnitt kann derart ausgeführt sein, dass er gegen den Druckindikator drückt, insbesondere wenn der Dehnungsbereich seine minimale Elongation, d.h. im ungespannten Zustand des Verbindungsbauteils, aufweist. Alternativ kann der Druckindikator auch am Kopfabschnitt angeordnet sein und so gegen ein weiteres Element gepresst werden. Ein derartiger Druckindikator kann ein beliebiges dem Fachmann bekanntes Material oder Element sein, das einen Druck anzeigt. Bevorzugt zeigt der Druckindikator den Druck optisch an.

Erfindungsgemäß umfasst der Druckindikator ein piezochromes Material oder ist daraus gebildet.

Als piezochromes Verhalten wird die Eigenschaft eines Stoffes oder eines Materials bezeichnet, bei Druckeinwirkung seine Farbe zu ändern. Bevorzugt ist diese Farbänderung reversibel. Dem Fachmann sind unterschiedliche piezochrome Materialien bekannt, die im Rahmen der vorliegenden Erfindung eingesetzt werden können, beispielsweise piezochrome organische Polymere, piezochrome Mineralien oder piezochrome Pigmente.

Bevorzugt ist das piezochrome Material ein piezochromer Polymer-Verbundstoff, insbesondere umfassend oder bestehend aus einem polymeren Matrixmaterial, in welchem ein piezochromer Stoff enthalten ist.

Gegebenenfalls ist vorgesehen, dass ein mit einem Endbereich des Verbindungsbauteils verbindbares oder verbundenes Abdeckelement vorgesehen ist. Das Abdeckelement kann entweder starr mit dem Endbereich des Verbindungsbauteils verbunden sein, oder es kann auf diesen aufsteckbar, aufschraubbar oder anderweitig an diesem befestigbar sein. Das Abdeckelement kann beispielsweise als aufschraubbare Mutter oder aufsteckbare Kappe ausgebildet sein. Insbesondere kann das Abdeckelement derart ausgebildet sein, dass es erst nach Aufbringen der Spannkraft angebracht wird.

Es kann vorgesehen sein, dass der Druckindikator im oder am Abdeckelement angeordnet ist. Alternativ kann vorgesehen sein, dass der Druckindikator am Kopfabschnitt des Druckstifts angeordnet ist. In beiden Ausführungsformen drückt beim Nachlassen der Spannkraft, also bei einer Verringerung der Länge des Dehnungsbereichs, der Druckstift auf das Abdeckelement und erzeugt einen Druck auf den Druckindikator.

Das Abdeckelement ist vorzugsweise dazu ausgebildet, plan mit dem Verbindungsbauteil abzuschließen. Es kann gegebenenfalls vorgesehen sein, dass das Abdeckelement derart ausgebildet ist, dass es im Wesentlichen plan mit dem Verbindungsbauteil abschließt, insbesondere wenn es vollständig am Verbindungsbauteil angebracht ist. Insbesondere kann das Abdeckelement ein offenes Ende der Ausnehmung des Verbindungsbauteils plan abdecken, sodass es beim Anbringen auf das gespannte Verbindungsbauteil gegen den herausragenden Druckstift gepresst wird. Wenn das Abdeckelement erst nach Anlegen der Spannkraft aufgesetzt oder aufgeschraubt wird, kann somit einfach überprüft werden, ob die Spannkraft einem geeigneten Wert entspricht.

Ist das Abdeckelement am Endbereich befestigbar, entsteht auch der Vorteil, dass dieses erst nach der Montage des Verbindungsbauteils an diesem angeordnet werden kann. Dadurch wird eine unnötige Belastung des Druckindikators vermieden, insbesondere da der Druckstift in der ungespannten Stellung des Verbindungsbauteils einen Druck auf den Druckindikator ausübt. Es entsteht auch der oben angeführte Vorteil, dass bei Befestigung des Abdeckelements nach Aufbringen der Spannkraft bereits eine erste Überprüfung des ordnungsgemäß ausgeführten Anziehvorganges, also insbesondere die ordnungsgemäße Größe der Spannkraft, des Verbindungsbauteils durchgeführt werden kann.

Gegebenenfalls ist vorgesehen, dass der Druckindikator auf der dem Kopfabschnitt abgewandten Seite mit einer wenigstens teilweise durchsichtigen Schutzplatte abgedeckt ist. Gegebenenfalls ist vorgesehen, dass das Abdeckelement auf der dem Kopfabschnitt abgewandten Seite eine wenigstens teilweise durchsichtigen Schutzplatte aufweist.

Die Schutzplatte kann den Druckindikator vor äußeren Einflüssen, beispielsweise vor Wasser, Sauerstoff, mechanischen Einflüssen, oder Ähnlichem schützen. Weiters kann die Schutzplatte den Druckindikator mechanisch stabilisieren und verhindern, dass der Kopfabschnitt des Druckstifts den Druckindikator durchstößt. Um eine freie Sicht auf den Druckindikator zu erlauben ist die Schutzplatte wenigstens teilweise durchsichtig ausgeführt, etwa als optisches Fenster beispielsweise aus Glas oder Kunststoff. Alternativ kann die Schutzplatte auch als perforierte Platte ausgeführt sein.

Die Schutzplatte kann auch aus einem elastischen Material gebildet sein oder dieses umfassen, sodass eine maximal zulässige Belastung des Druckindikators nicht überschritten wird. Eine Sichtfreistellung im Abdeckelement kann gegebenenfalls mit einem elastischen Material gefüllt sein, welches vorzugsweise transparent oder durchsichtig ist, wobei auch eine Füllung mit größerer Dicke als Schutzplatte bezeichnet werden kann.

Gegebenenfalls ist vorgesehen, dass die Ausnehmung im Verbindungsbauteil parallel zur Längserstreckungsrichtung des Verbindungsbauteils, vorzugsweise zentral entlang einer Mittellängsachse des Verbindungsbauteils, angeordnet ist.

Gegebenenfalls ist vorgesehen, dass der Druckstift parallel zur Längserstreckungsrichtung des Verbindungsbauteils, vorzugsweise zentral entlang einer Mittellängsachse des Verbindungsbauteils, angeordnet ist.

Gegebenenfalls ist vorgesehen, dass der Druckstift an seinem dem Kopfabschnitt entgegengesetzten Ende mit einem Haltemittel im Wesentlichen starr mit dem Verbindungsbauteil verbunden ist. Bevorzugt ist der Druckstift in allen anderen Bereichen frei innerhalb des Verbindungsbauteils beweglich.

Gegebenenfalls kann das Haltemittel ein Polymermaterial sein, in welches das dem Kopfabschnitt des Druckstücks entgegengesetzte Ende eingebettet und/oder eingegossen ist.

Das Polymermaterial kann also in der Ausnehmung des Verbindungsbauteils angeordnet sein, insbesondere nur am innersten Abschnitt der Ausnehmung. Das Polymermaterial ist insbesondere aushärtbares Kunstharz, beispielsweise Epoxid oder Polyester. Vorzugsweise weist das Polymermaterial nur eine geringe oder keine Volumsveränderung beim Aushärten auf.

Gegebenenfalls kann das Haltemittel ein magnetisches Halteelement sein, wobei der Druckstift wenigstens an seinem dem Kopfabschnitt entgegengesetzten Ende ein magnetisches und/oder ein ferromagnetisches Material aufweist.

Diese Ausführung ermöglicht eine reversible Befestigung des Druckstifts in der Ausnehmung. Die Verbindung wird durch die Magnetkraft zwischen dem magnetischen Halteelement und dem Druckstift bzw. dem Ende des Druckstifts ermöglicht. Das magnetische Halteelement kann ein magnetisches und/oder ein ferromagnetisches Material umfassen oder daraus gebildet sein.

Gegebenenfalls kann das Verbindungsbauteil zur Gänze aus einem ferromagnetischen Material gebildet sein, wobei in diesem Fall das entsprechende Ende des Druckstifts ein magnetisches Material aufweist.

Gegebenenfalls ist vorgesehen, dass der Druckstift an seinem dem Kopfabschnitt entgegengesetzten Ende einen konisch zulaufenden Bereich, insbesondere eine Spitze, aufweist. Dies dient einer besseren Einführbarkeit des Druckstifts in die Ausnehmung, was insbesondere vorteilhaft ist da die Ausnehmung üblicherweise einen sehr geringen Durchmesser im Bereich von weniger als 5 mm, bevorzugt von weniger als 2 mm, aufweist. Die Ausnehmung kann mit einem beliebigen Verfahren hergestellt werden, das zur Bildung einer derartigen Ausnehmung geeignet ist, beispielsweise durch Bohren oder durch Funkenerosion.

Gegebenenfalls kann das Haltemittel eine mechanische Klemmverbindung sein, in welche das dem Kopfabschnitt des Druckstücks entgegengesetzte Ende starr festklemmt wird.

Gegebenenfalls ist vorgesehen, dass die Spannkraft durch wenigstens eine im zweiten Spannbereich angeordnete Spannmutter erzeugbar ist oder erzeugt wird.

Gegebenenfalls ist vorgesehen, dass der erste Spannbereich mit dem ersten Element durch Verkleben, Verschweißen und/oder Vergießen starr verbindbar oder verbunden ist. Diese Ausführungsform ist insbesondere dann vorteilhaft, wenn das erste Element ein massives Material, beispielsweise ein Betonkörper ist, das nicht vollständig vom Verbindungsbauteil durchdrungen werden kann.

Gegebenenfalls ist vorgesehen, dass das Verbindungsbauteil im ersten Spannbereich eine Auskragung und/oder eine Befestigungsmutter zur formschlüssigen Verbindung mit dem ersten Element aufweist, sodass das Verbindungsbauteil teilweise in eine Freistellung des ersten Elements einführbar ist. Diese Ausführungsform ist insbesondere dann vorteilhaft, wenn zwei Elemente mit geringer Dicke, beispielsweise Platten oder Träger, miteinander verbunden werden sollen.

Die Erfindung betrifft weiterhin eine Anordnung umfassend ein erfindungsgemäßes Verbindungsbauteil sowie ein erstes Element und ein zweites Element, wobei im ersten Element oder im zweiten Element eine zum Durchführen und/oder Einführen des Verbindungsbauteils geeignete Freistellung vorgesehen ist.

Gegebenenfalls ist vorgesehen, dass das Verbindungsbauteil wenigstens im Dehnungsbereich innerhalb der Freistellung frei bewegbar angeordnet ist.

Die Bezeichnung "frei bewegbar" bedeutet in Zusammenhang mit der vorliegenden Erfindung, dass eine Relativbewegung zwischen dem Dehnungsbereich und einem Element möglich ist. Gegebenenfalls können Stabilisierungselemente, wie beispielsweise stabilisierende Bandagen vorgesehen sein, die die Reibung zwischen dem Element und dem Verbindungsbauteil in gewissem Maße verringern, und dadurch eine Elongation des Dehnungsbereichs zulassen bzw. den Dehnungsbereich vergrößern.

Die Erfindung betrifft auch ein System umfassend ein erfindungsgemäßes Verbindungsbauteil, und ein Abdeckelement.

Weitere Merkmale der Erfindung ergeben sich aus den Patentansprüchen, den Figuren und den Ausführungsbeispielen.

Nachfolgend wird die Erfindung anhand von exemplarischen Ausführungsbeispielen im Detail erörtert. Die Ausführungsbeispiele zeigen lediglich bevorzugte Varianten der Erfindung, sollen den Schutzbereich jedoch in keiner Weise beschränken. Es zeigen:
Fig. 1: eine schematische Darstellung eines ersten Ausführungsbeispiels der Erfindung;
Fig. 2: eine Detailansicht eines Bereichs von Fig. 1; und
Fig. 3: eine schematische Darstellung eines zweiten Ausführungsbeispiels der Erfindung.

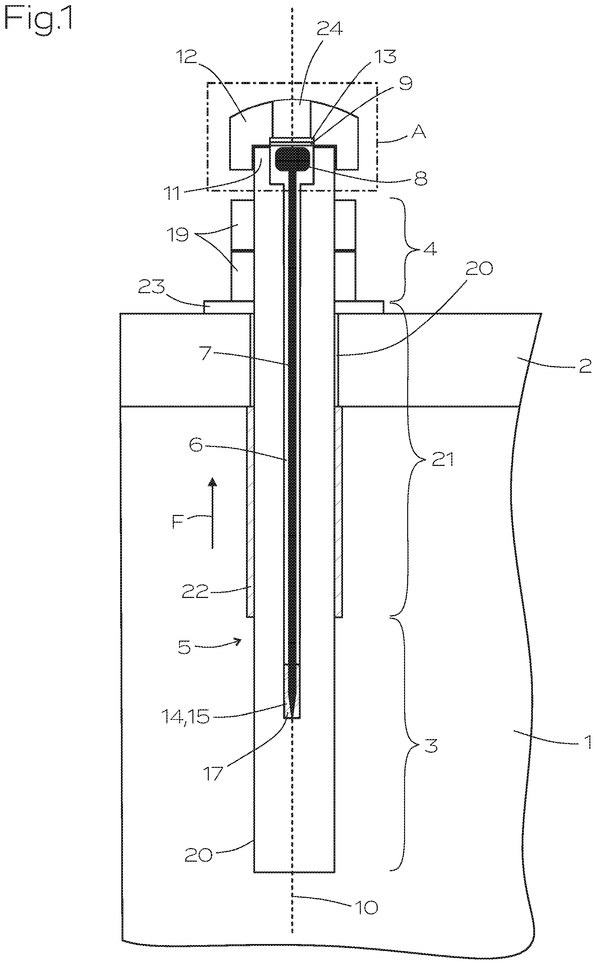

Fig. 1 zeigt eine schematische Darstellung eines ersten Ausführungsbeispiels der Erfindung, wobei das Verbindungsbauteil 5 zur Verbindung eines ersten Elements 1 und eines zweiten Elements 2 verwendet wird. Im vorliegenden Ausführungsbeispiel ist das Verbindungsbauteil ein Gewindestab.

Das erste Element 1 ist in diesem Ausführungsbeispiel ein massiver Betonkörper, welcher eine Freistellung 20 in Form einer Bohrung aufweist, in die das Verbindungsbauteil 5 mit seinem ersten Spannbereich 3 und einem Teil des Dehnungsbereichs 21 eingeführt ist. Der Dehnungsbereich 21 erstreckt sich in diesem Ausführungsbeispiel im Wesentlichen im Bereich der Bandage 22, der Höhe des zweiten Elements 2 und der Höhe der Beilagscheibe 23. Der erste Spannbereich 3 ist mit der Freistellung 20 des ersten Elements 1 verklebt, sodass das Verbindungsbauteil 5 fest mit dem ersten Element 1 verbunden ist. Der Dehnungsbereich 21 ist nicht fest mit der Freistellung 20 des ersten Elements 1 verbunden. Im Dehnungsbereich 21 ist eine Bandage 22 vorgesehen, die die Reibung zwischen dem Element 1 und dem Verbindungsbauteil 5 in gewissem Maße verringern, und dadurch den Dehnungsbereich 21 vergrößert. Durch die Bandage 22 wird keine Wesentliche kraftschlüssige Verbindung zwischen der Freistellung 20 und dem Befestigungsbolzen 5 herstellt.

In anderen, nicht gezeigten Ausführungsbeispielen kann die Bandage 22 auch weggelassen werden, wodurch das Verbindungsbauteil 5 über einen größeren Bereich starr mit dem ersten Element 1 verbunden wird. Dadurch sinkt die effektive Länge des Dehnungsbereichs 21 und der erste Spannbereich 3 vergrößert sich.

Das zweite Element 2 ist in diesem Ausführungsbeispiel eine Stahlplatte, welche ebenfalls eine Freistellung 20 in Form einer Bohrung aufweist. Das Verbindungsbauteil 5 verläuft vollständig durch die Freistellung 20.

Innerhalb des Verbindungsbauteils 5 ist eine Ausnehmung 6 vorgesehen, die in Längserstreckungsrichtung 10 des Verbindungsbauteils verläuft. In der Ausnehmung ist ein Druckstift 7 angeordnet, welcher an einem Ende einen verbreiterten Kopfabschnitt 8 aufweist. An seinem anderen Ende weist der Druckstift 7 eine Spitze 17 auf, was dem leichteren Einführen des Druckstifts 7 in die Ausnehmung 6 dient.

Im Bereich der Spitze 17 ist der Druckstift 7 über ein Haltemittel 14 mit dem Verbindungsbauteil 5 verbunden. Das Haltemittel 14 ist als Polymermaterial 15 ausgeführt, das in ungehärtetem Zustand in die Ausnehmung 6 eingebracht wird und dort nach Positionierung des Druckstifts 7 aushärtet und damit den Druckstift 7 im Wesentlichen unverschieblich befestigt. Der Druckstift 7 ist nur im Bereich eines Endes, in diesem Ausführungsbeispiel jenes Endes, an dem die Spitze 17 angeordnet ist, fest mit dem Verbindungsbauteil 5 verbunden.

An dem Ende des Verbindungsbauteils 5, das dem zweiten Spannbereich 4 benachbart ist, ist ein Abdeckelement 12 angeordnet, das als aufschraubbare Hutmutter ausgeführt ist. In seiner Mitte weist das Abdeckelement 12 innenliegend einen Druckindikator 9 auf, der in diesem Ausführungsbeispiel als Folie aus einem piezochromen Polymerwerkstoff ausgeführt ist. Der Druckindikator 9 hat ohne Druckbeaufschlagung, also bei Atmosphärendruck eine blaue Färbung, während er bei einem erhöhten Druck, insbesondere bei einem Druck von größer als 10 N/cm² eine rote Färbung aufweist.

Der Druckindikator 9 wird von einer Schutzplatte 13 aus transparentem Plexiglas abgedeckt. Zusätzlich ist im Abdeckelement 12 eine Sichtfreistellung 24 vorgesehen, die eine freie Sicht durch die Schutzplatte 13 auf den Druckindikator 9 ermöglicht.

In Fig. 1 schließt das Abdeckelement 12 plan mit dem Verbindungsbauteil 5, insbesondere mit dem offenen Ende der Ausnehmung 6, ab.

Der Druckstift 7 weist eine geeignete Länge auf, dass dieser in ungespanntem Zustand des Befestigungsbolzens 5 etwa 0,2 mm über das Ende des Bolzens 5 hinausragt. Daher übt der Kopfabschnitt 8 bei vollständig aufgeschraubtem Abdeckelement 12 einen Druck auf den Druckindikator 9 aus. In diesem Zustand hat der Druckindikator eine rote Färbung.

Die Spannkraft F wird durch zwei Spannmuttern 19 erzeugt. Zwischen dem zweiten Element 2 und einer Spannmutter 19 ist eine Beilagscheibe 23 angeordnet.

Beim Festziehen der Spannmutter 19, also bei Erhöhen der Spannkraft F, erfolgt eine Elongation des Dehnungsbereichs 21, wobei die Position des Kopfabschnitts 8 des Druckstifts 7 im Wesentlichen unverändert bleibt. Dadurch wird der durch den Kopfabschnitt 8 auf den Druckindikator 9 ausgeübte Druck reduziert und bei Unterschreiten des für die Farbveränderung nötigen Drucks, also insbesondere bei Wegfallen des Kontakts zwischen Druckindikator 9 und Kopfabschnitt 8, ändert sich die Farbe des Druckindikators in blau. Dies entspricht der in Fig. 1 dargestellten gespannten Stellung des Verbindungsbauteils 5.

Durch die Spannkraft F werden das erste Element 1 und das zweite Element 2 kraftschlüssig miteinander verbunden. Die Spannkraft F korreliert mit der Elongation des Dehnungsbereichs 21 des Verbindungsbauteils 5. Nimmt die Spannkraft F ab, reduziert sich auch die Elongation des Dehnungsbereichs 21.

Würden sich die Spannmuttern 19 lockern und die Spannkraft F dadurch nachlassen, würde der Kopfabschnitt 8 des Druckstifts 7 wieder gegen den Druckindikator 9 drücken, was eine Farbänderung des piezochromen Materials zur Folge hätte. Bei der Überprüfung der Verbindung wäre an der roten Färbung sofort zu erkennen, dass die Spannkraft F abgenommen hat.

Bei geeigneter Einstellung kann eine Detektion bereits dann möglich sein, wenn die Befestigungsmuttern 19 nicht vollständig gelöst sind, also zu einem Zeitpunkt, an dem durch manuelle Überprüfung ein Lösen der Verbindung noch nicht feststellbar wäre. Durch Festziehen der Befestigungsmuttern 19 kann die Verbindung dann wieder gestärkt werden. Vorzugsweise erfolgt das Festziehen solange, bis wieder die Farbänderung des Druckindikators 9 eine ausreichende Spannkraft F anzeigt.

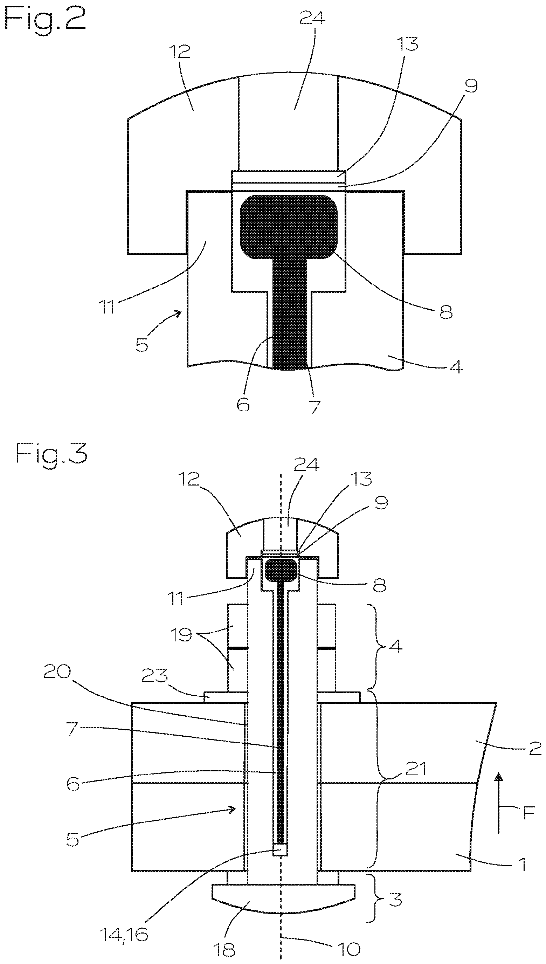

Fig. 2 zeigt eine Detailansicht des Bereichs A in Fig. 1, wobei der Kopfabschnitt 8 und das Abdeckelement 9 im Detail dargestellt sind. Die Funktion wurde bereits vorstehend erläutert, daher werden die einzelnen Elemente an dieser Stelle nicht näher beschrieben.

Fig. 3 zeigt eine schematische Darstellung eines zweiten Ausführungsbeispiels der Erfindung, wobei im Vergleich zum ersten Ausführungsbeispiel auch das erste Element 1 eine Stahlplatte ist. Sowohl das erste Element 1 als auch das zweite Element 2 weisen die Freistellungen 20 auf, durch welche das Verbindungsbauteil 5 hindurchläuft. Das Verbindungsbauteil 5 weist auf der Seite des ersten Elements 1 eine Auskragung 18 auf, sodass er nicht durch die Freistellung 20 rutschen kann. Die Beaufschlagung mit der Spannkraft F erfolgt analog zum ersten Ausführungsbeispiel und wird an dieser Stelle nicht nochmals erläutert.

Ein weiterer Unterschied im Vergleich zum ersten Ausführungsbeispiel ist die Art der Befestigung des Druckstifts 7 in der Ausnehmung 6 des Befestigungsbolzens 5. Am unteren Ende der Ausnehmung 6 ist ein Haltemittel 14 in Form eines magnetischen Halteelements 16 angeordnet. Das magnetische Halteelement ist ein Stück eines Permanentmagneten. Der restliche Bolzen 5 ist aus Edelstahl mit austenitischem Gefüge gefertigt, sodass dieser nicht magnetisch ist. Der Druckstift 7 besteht aus ferromagnetischem Material und wird daher vom magnetischen Halteelement 16 angezogen. Dadurch wird der Druckstift 7 fest in der Ausnehmung 6 positioniert.

In einer nicht gezeigten Ausführungsform des zweiten Ausführungsbeispiels kann sich die Ausnehmung 6 im Wesentlichen über die volle Länge des Verbindungsbauteils 5 erstrecken. Der Druckstift 7 kann in diesem Fall im Bereich der Auskragung 18 des Verbindungsbauteils 5 befestigt sein.

### Bezugszeichenliste

- 1: erstes Element
- 2: zweites Element
- 3: erster Spannbereich
- 4: zweiter Spannbereich
- 5: Verbindungsbauteil
- 6: Ausnehmung
- 7: Druckstift
- 8: Kopfabschnitt
- 9: Druckindikator
- 10: Längserstreckungsrichtung
- 11: Endbereich
- 12: Abdeckelement
- 13: Schutzplatte
- 14: Haltemittel
- 15: Polymermaterial
- 16: magnetisches Halteelement
- 17: Spitze
- 18: Auskragung
- 19: Spannmutter
- 20: Freistellung
- 21: Dehnungsbereich
- 22: Bandage
- 23: Beilagscheibe
- 24: Sichtfreistellung

- F: Spannkraft

## Patentansprüche

1. **Mechanisches Verbindungsbauteil** zum Verbinden eines ersten Elements (1) mit einem zweiten Element (2) durch Ausüben einer Spannkraft (F), umfassend einen ersten Spannbereich (3) und einen vom ersten Spannbereich (3) beabstandet angeordneten zweiten Spannbereich (4), wobei zwischen dem ersten Spannbereich (3) und dem zweiten Spannbereich (4) ein Dehnungsbereich (21) angeordnet ist,
- wobei das Verbindungsbauteil durch die Ausübung der Spannkraft (F) von einer entspannten Stellung in eine gespannte Stellung bringbar ist, wobei sich die Länge des Dehnungsbereichs (21) beim Ausüben der Spannkraft (F) erhöht,
- wobei sich im Inneren des Verbindungsbauteils (5) wenigstens im Dehnungsbereich (21) eine längsgestreckte Ausnehmung (6) erstreckt,
- wobei wenigstens teilweise innerhalb der Ausnehmung (6) ein Druckstift (7) angeordnet ist, wobei der Druckstift (7) einen Kopfabschnitt (8) umfasst, und wobei der Druckstift (7) an einem Ende mit dem Verbindungsbauteil verbunden ist und an seinem anderen Ende nicht mit dem Verbindungbauteil verbunden ist, und
- wobei im Bereich des Kopfabschnitts (8) ein Druckindikator (9) angeordnet ist, wobei der Kopfabschnitt (8) derart angeordnet ist, um in der entspannten Stellung des Verbindungsbauteils Druck auf den Druckindikator (9) auszuüben und in der gespannten Stellung des Verbindungsbauteils keinen oder einen im Vergleich zur entspannten Stellung reduzierten Druck auf den Druckindikator (9) auszuüben
**dadurch gekennzeichnet, dass** der Druckindikator (9) ein piezochromes Material umfasst oder daraus gebildet ist.

2. Verbindungsbauteil nach Anspruch 1, **dadurch gekennzeichnet, dass** sich die Ausnehmung (6) vom ersten Spannbereich (3) zum zweiten Spannbereich (4) erstreckt, und/oder dass sich der Druckstift (7) vom ersten Spannbereich (3) zum zweiten Spannbereich (4) erstreckt, und dass ein Ende des Druckstifts (7) im ersten Spannbereich (3) mit dem Verbindungsbauteil verbunden ist, und im zweiten Spannbereich (4) nicht mit dem Verbindungsbauteil verbunden ist.

3. Verbindungsbauteil nach einem der Ansprüche 1 oder 2, **dadurch gekennzeichnet, dass** das piezochrome Material ein piezochromer Polymer-Verbundstoff ist, insbesondere umfassend oder bestehend aus einem polymeren Matrixmaterial, in welchem ein piezochromer Stoff enthalten ist.

4. Verbindungsbauteil nach einem der Ansprüche 1 bis 3, **dadurch gekennzeichnet, dass** ein mit einem Endbereich (11) des Verbindungsbauteils verbindbares oder verbundenes Abdeckelement (12) vorgesehen ist,
- wobei der Druckindikator (9) am Abdeckelement (12) angeordnet ist, oder
- wobei der Druckindikator (9) am Kopfabschnitt (8) des Druckstifts (7) angeordnet ist.

5. Verbindungsbauteil nach Anspruch 4, **dadurch gekennzeichnet, dass** das Abdeckelement (12) derart ausgebildet ist, dass es im Wesentlichen plan mit dem Verbindungbauteil (5) abschließt, und/oder dass das Abdeckelement (12) auf der dem Kopfabschnitt (8) abgewandten Seite eine wenigstens teilweise durchsichtigen Schutzplatte (13) aufweist.

6. Verbindungsbauteil nach Anspruch 5, **dadurch gekennzeichnet, dass** die Schutzplatte (13) aus einem elastischen Material gebildet ist.

7. Verbindungsbauteil nach einem der Ansprüche 1 bis 6, **dadurch gekennzeichnet, dass** die Ausnehmung (6) parallel zur Längserstreckungsrichtung (10) des Verbindungsbauteils (5), vorzugsweise zentral entlang einer Mittellängsachse des Verbindungsbauteils (5), angeordnet ist, und/oder dass der Druckstift (7) parallel zur Längserstreckungsrichtung (10) des Verbindungsbauteils (5), vorzugsweise zentral entlang einer Mittellängsachse des Verbindungsbauteils (5), angeordnet ist.

8. Verbindungsbauteil nach einem der Ansprüche 1 bis 7, **dadurch gekennzeichnet, dass** der Druckstift (7) an seinem dem Kopfabschnitt (8) entgegengesetzten Ende mit einem Haltemittel (14) im Wesentlichen starr und/oder unverschieblich mit dem Verbindungsbauteils (5) verbunden ist.

9. Verbindungsbauteil nach Anspruch 8, **dadurch gekennzeichnet, dass** das Haltemittel (14) ein Polymermaterial (15) ist, in welches das dem Kopfabschnitt (8) des Druckstifts (7) entgegengesetzte Ende eingebettet und/oder eingegossen ist, oder dass das Haltemittel (14) ein magnetisches Halteelement (16) ist, wobei der Druckstift (7) wenigstens an seinem dem Kopfabschnitt (8) entgegengesetzten Ende ein magnetisches und/oder ein ferromagnetisches Material aufweist.

10. Verbindungsbauteil nach einem der Ansprüche 1 bis 9, **dadurch gekennzeichnet, dass** der Druckstift (7) an seinem dem Kopfabschnitt (8) entgegengesetzten Ende einen konisch zulaufenden Bereich, insbesondere eine Spitze (17), aufweist.

11. Verbindungsbauteil nach einem der Ansprüche 1 bis 10, **dadurch gekennzeichnet, dass** die Spannkraft (F) durch wenigstens eine im zweiten Spannbereich (4) angeordnete Spannmutter (19) erzeugbar ist oder erzeugt wird, und/oder dass der erste Spannbereich (3) mit dem ersten Element (1) durch Verkleben, Verschweißen und/oder Vergießen starr verbindbar oder verbunden ist.

12. Verbindungsbauteil nach einem der Ansprüche 1 bis 11, **dadurch gekennzeichnet, dass** der Verbindungsbauteil im ersten Spannbereich (3) eine Auskragung (18) und/oder eine Befestigungsmutter zur formschlüssigen Verbindung mit dem ersten Element (1) aufweist, sodass der Verbindungsbauteil teilweise in eine Freistellung (20) des ersten Elements (1) einführbar ist.

13. Anordnung umfassend ein Verbindungsbauteil nach einem der Ansprüche 1 bis 12 sowie ein erstes Element (1) und ein zweites Element (2), wobei im ersten Element (1) oder im zweiten Element (2) eine zum Durchführen und/oder Einführen des Verbindungsbauteils (5) geeignete Freistellung (20) vorgesehen ist.

14. Anordnung nach Anspruch 13, **dadurch gekennzeichnet, dass** das Verbindungsbauteil (5) wenigstens im Dehnungsbereich (21) innerhalb der Freistellung (20) frei bewegbar angeordnet ist.

15. System umfassend ein Verbindungsbauteil nach einem der Ansprüche 1 bis 12 und ein mit dem Verbindungsbauteil (5) verbundenes Abdeckelement (12).

## Claims

1. A **mechanical connecting component** for connecting a first element (1) to a second element (2) by exerting a clamping force (F), comprising a first clamping region (3) and a second clamping region (4), which is arranged at a distance from the first clamping region (3), wherein an expansion region (21) is arranged between the first clamping region (3) and the second clamping region (4),
- wherein the connecting component can be moved from an unclamped position to a clamped position by exerting the clamping force (F), the length of the expansion region (21) increasing when the clamping force (F) is exerted,
- wherein an elongated recess (6) extends in the interior of the connecting component (5) at least in the expansion region (21),
- wherein a pressure pin (7) is arranged at least partially inside the recess (6), the pressure pin (7) comprising a head section (8), and the pressure pin (7) being connected to the connecting component at one end and not being connected to the connecting component at its other end, and
- wherein a pressure indicator (9) is arranged in the region of the head section (8), the head section (8) being arranged in such a way as to exert pressure on the pressure indicator (9) in the unclamped position of the connecting component and to exert no pressure or a pressure which is reduced in comparison with the unclamped position on the pressure indicator (9) in the clamped position of the connecting component,
**characterised in that** the pressure indicator (9) comprises or is made of a piezochromic material.

2. The connecting component according to claim 1, **characterised in that** the recess (6) extends from the first clamping region (3) to the second clamping region (4), and/or **in that** the pressure pin (7) extends from the first clamping region (3) to the second clamping region (4), and **in that** one end of the pressure pin (7) is connected to the connecting component in the first clamping region (3) and is not connected to the connecting component in the second clamping region (4).

3. The connecting component according to one of claims 1 or 2, **characterised in that** the piezochromic material is a piezochromic polymer composite, in particular comprising or consisting of a polymeric matrix material in which a piezochromic substance is contained.

4. The connecting component according to one of claims 1 to 3, **characterised in that** a cover element (12) is provided, which can be or is connected to an end region (11) of the connecting component,
- wherein the pressure indicator (9) is arranged on the cover element (12), or
- wherein the pressure indicator (9) is arranged on the head section (8) of the pressure pin (7).

5. The connecting component according to claim 4, **characterised in that** the cover element (12) is formed such that it is substantially flush with the connecting component (5), and/or in that the cover element (12) has an at least partially transparent protective plate (13) on the side facing away from the head section (8).

6. The connecting component according to claim 5, **characterised in that** the protective plate (13) is made of an elastic material.

7. The connecting component according to one of claims 1 to 6, **characterised in that** the recess (6) is arranged parallel to the longitudinal extension direction (10) of the connecting component (5), preferably centrally along a central longitudinal axis of the connecting component (5), and/or **in that** the pressure pin (7) is arranged parallel to the longitudinal extension direction (10) of the connecting component (5), preferably centrally along a central longitudinal axis of the connecting component (5).

8. The connecting component according to one of claims 1 to 7, **characterised in that** the pressure pin (7) is substantially rigidly and/or non-displaceably connected to the connecting component (5) at its end opposite the head section (8) by a retaining means (14).

9. The connecting component according to claim 8, **characterised in that** the retaining means (14) is a polymer material (15) in which the end opposite the head section (8) of the pressure pin (7) is embedded and/or molded, or **in that** the retaining means (14) is a magnetic retaining element (16), the pressure pin (7) having a magnetic and/or a ferromagnetic material at least at its end opposite the head section (8).

10. The connecting component according to one of claims 1 to 9, **characterised in that** the pressure pin (7) has, at its end opposite the head portion (8), a conically tapering region, in particular a tip (17).

11. The connecting component according to one of claims 1 to 10, **characterised in that** the clamping force (F) can be or is generated by at least one clamping nut (19) arranged in the second clamping region (4), and/or **in that** the first clamping region (3) can be rigidly connected or is connected to the first element (1) by bonding, welding and/or casting.

12. The connecting component according to one of claims 1 to 11, **characterised in that** the connecting component in the first clamping region (3) has a projection (18) and/or a fastening nut for positive connection to the first element (1), so that the connecting component can be partially inserted into a clearance (20) of the first element (1).

13. An arrangement comprising a connecting component according to one of claims 1 to 12 and a first element (1) and a second element (2), wherein a clearance (20) is provided in the first element (1) or in the second element (2), which is suitable for passing through and/or inserting the connecting component (5).

14. The arrangement according to claim 13, **characterised in that** the connecting component (5) is arranged to be freely movable at least in the expansion region (21) within the clearance (20).

15. A system comprising a connecting component according to one of claims 1 to 12 and a cover element (12), which is connected to the connecting component (5).

## Revendications

1. **Élément de liaison mécanique** pour relier un premier élément (1) à un deuxième élément (2) en exerçant une force de serrage (F), comprenant une première zone de serrage (3) et une deuxième zone de serrage (4) disposée à distance de la première zone de serrage (3), une zone d'extension (21) étant disposée entre la première zone de serrage (3) et la deuxième zone de serrage (4),
- l'élément de liaison pouvant être amené d'une position détendue à une position tendue en exerçant la force de serrage (F), la longueur de la zone d'extension (21) augmentant lorsque la force de serrage (F) est exercée,
- un évidement (6) allongé s'étendant à l'intérieur de l'élément de liaison (5) au moins dans la zone d'extension (21),
- une tige de pression (7) étant disposée au moins partiellement à l'intérieur de l'évidement (6), la tige de pression (7) comprenant une section de tête (8), et la tige de pression (7) étant reliée à une extrémité à l'élément de liaison et n'étant pas reliée à son autre extrémité à l'élément de liaison, et
- un indicateur de pression (9) étant disposé dans la zone de la section de tête (8), la section de tête (8) étant disposée de manière à exercer une pression sur l'indicateur de pression (9) dans la position détendue de l'élément de liaison et à ne pas exercer de pression sur l'indicateur de pression (9) dans la position tendue de l'élément de liaison ou à exercer une pression réduite par rapport à la position détendue,
**caractérisé en ce que** l'indicateur de pression (9) comprend ou est constitué d'un matériau piézochrome.

2. Élément de liaison selon la revendication 1, **caractérisé en ce que** l'évidement (6) s'étend de la première zone de serrage (3) à la deuxième zone de serrage (4), et/ou **en ce que** la tige de pression (7) s'étend de la première zone de serrage (3) à la deuxième zone de serrage (4), et **en ce qu'**une extrémité de la tige de pression (7) est reliée à l'élément de liaison dans la première zone de serrage (3), et n'est pas reliée à l'élément de liaison dans la deuxième zone de serrage (4).

3. Élément de liaison selon l'une des revendications 1 ou 2, **caractérisé en ce que** le matériau piézochrome est un composite polymère piézochrome, en particulier comprenant ou constitué d'un matériau de matrice polymère dans lequel est contenue une substance piézochrome.

4. Élément de liaison selon l'une des revendications 1 à 3, **caractérisé en ce qu'**il est prévu un élément de couverture (12) pouvant être relié ou étant relié à une zone d'extrémité (11) de l'élément de liaison,
- l'indicateur de pression (9) étant disposé sur l'élément de couverture (12), ou
- l'indicateur de pression (9) étant disposé sur la section de tête (8) de la tige de pression (7).

5. Élément de liaison selon la revendication 4, **caractérisé en ce que** l'élément de couverture (12) est réalisé de telle sorte qu'il se termine sensiblement à plat avec l'élément de liaison (5), et/ou **en ce que** l'élément de couverture (12) présente une plaque de protection (13) au moins partiellement transparente sur le côté opposé à la section de tête (8).

6. Élément de liaison selon la revendication 5, **caractérisé en ce que** la plaque de protection (13) est formée d'un matériau élastique.

7. Élément de liaison selon l'une des revendications 1 à 6, **caractérisé en ce que** l'évidement (6) est disposé parallèlement à la direction d'extension longitudinale (10) de l'élément de liaison (5), de préférence de manière centrale le long d'un axe longitudinal médian de l'élément de liaison (5), et/ou **en ce que** la tige de pression (7) est disposée parallèlement à la direction d'extension longitudinale (10) de l'élément de liaison (5), de préférence de manière centrale le long d'un axe longitudinal médian de l'élément de liaison (5).

8. Élément de liaison selon l'une des revendications 1 à 7, **caractérisé en ce que** la tige de pression (7) est reliée à son extrémité opposée à la section de tête (8) à l'élément de liaison (5) de manière sensiblement rigide et/ou non déplaçable par un moyen de retenue (14).

9. Élément de liaison selon la revendication 8, **caractérisé en ce que** le moyen de retenue (14) est un matériau polymère (15) dans lequel l'extrémité opposée à la section de tête (8) de la tige de pression (7) est noyée et/ou moulée, ou **en ce que** le moyen de retenue (14) est un élément de retenue magnétique (16), la tige de pression (7) comprenant un matériau magnétique et/ou un matériau ferromagnétique au moins à son extrémité opposée à la section de tête (8).

10. Élément de liaison selon l'une des revendications 1 à 9, **caractérisé en ce que** la tige de pression (7) présente à son extrémité opposée à la section de tête (8) une zone se terminant en cône, en particulier une pointe (17).

11. Élément de liaison selon l'une des revendications 1 à 10, **caractérisé en ce que** la force de serrage (F) peut être ou est générée par au moins un écrou de serrage (19) disposé dans la deuxième zone de serrage (4), et/ou **en ce que** la première zone de serrage (3) peut être ou est reliée rigidement au premier élément (1) par collage, soudage et/ou moulage.

12. Élément de liaison selon l'une des revendications 1 à 11, **caractérisé en ce que** l'élément de liaison présente, dans la première zone de serrage (3), une saillie (18) et/ou un écrou de fixation pour la liaison par complémentarité de forme avec le premier élément (1), de sorte que l'élément de liaison peut être partiellement inséré dans un dégagement (20) du premier élément (1).

13. Agencement comprenant un élément de liaison selon l'une des revendications 1 à 12 ainsi qu'un premier élément (1) et un deuxième élément (2), un dégagement (20) adapté au passage et/ou à l'insertion de l'élément de liaison (5) étant prévu dans le premier élément (1) ou dans le deuxième élément (2).

14. Agencement selon la revendication 13, **caractérisé en ce que** l'élément de liaison (5) est disposé de manière à pouvoir se déplacer librement au moins dans la zone d'extension (21) à l'intérieur du dégagement (20).

15. Système comprenant un élément de liaison selon l'une des revendications 1 à 12 et un élément de couverture (12) relié à l'élément de liaison (5).
